**Europäisches Patentamt**

**European Patent Office**

**Office européen des brevets**

(19)

(11) **EP 1 148 324 A2**

(12) # EUROPEAN PATENT APPLICATION

(43) Date of publication:
24.10.2001 Bulletin 2001/43

(51) Int Cl.$^7$: **G01L 1/24**

(21) Application number: **01104887.3**

(22) Date of filing: **28.02.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **17.04.2000 JP 2000114542**

(71) Applicant: **NTT Advanced Technology Corporation**
**Tokyo (JP)**

(72) Inventors:
• **Sugai, Eiichi, c/o NTT Advanced Technol., Corp. Tokyo (JP)**

• **Sugita, Etsuji, c/o NTT Advanced Technol., Corp. Tokyo (JP)**
• **Yoshida, Koji, c/o NTT Advanced Technol., Corp. Tokyo (JP)**

(74) Representative:
**von Samson-Himmelstjerna, Friedrich R., Dipl.-Phys. et al**
**SAMSON & PARTNER**
**Widenmayerstrasse 5**
**80538 München (DE)**

(54) **Patch type optical fiber sensor**

(57) In a patch type optical fiber sensor, an optical fiber (2) has at its part a fiber Bragg grating (3) and that part is fixed to a film (4) serving as a base to form a film-like detecting element. Opposite ends of that part are connected to optical cord (1) to protect the film-like detecting element. The detecting element is bonded to an object (9) to be detected by bonding agent or by welding.

# FIG. 1A

EP 1 148 324 A2

FIG. 1B

**Description**

Background of the Invention

The present invention relates to a patch type optical fiber sensor for measuring strain by using a fiber Bragg grating (hereinafter simply referred to as FBG).

Recently, a strain sensor or a temperature sensor using the FBG as a fibrous detecting element has been developed progressively. The FBG is manufactured by writing a Bragg grating (diffraction lattice) in an optical fiber in a direction in which input light travels and takes advantage of the fact that when the pitch of the grating written in the optical fiber changes with strain or temperature, the center wavelength (Bragg wavelength)of spectral peak light which reflect from the Bragg grating or the center wavelength(Bragg wavelength) of specral dip light which the transmit through the Bragg grating changes in accordance with a change in grating pitch.

Advantageously, the FBG can permit long-distance transmission characteristic of the optical fiber and can be immune to electromagnetic noise. In addition, by changing the pitch of the grating in one optical fiber to shift the Bragg wavelength , different detecting elements usable at many points can be obtained. These advantages make the FBG different from the conventional electrical strain gauge in structure and characteristics.

Optical fiber normally used is formed from silica glass, having an outer diameter of 125 μm, and is covered with polymer coating to have an outer diameter of about 250 μm. Moreover, UV-cured epoxy acrylate coatings about 60 μm thick are widely used in telecommunications. For manufacture of the FBG, the UV-cured epoxy acrylate coating is stripped short length to expose the silica glass, thus forming a Bragg grating part which in turn is recoated.

According to a known technique, the optical fiber written with the FBG is used as a strain sensor as will be described below. More particularly, an optical fiber written with a FBG, removed of the coating or recoated with UV-cured epoxy acrylate, is bonded and attached to an object to be detected with bonding agent such as epoxy. In bonding, align the sensor with the position, place the polythylene sheet over the sensor, and apply a constant pressure either with your thumb or a clamp. But when the optical fiber removed of coating is used, flaws or micro-cracks are generated to increase the probability of generation of breakage. Further, disadvantageously, most of the general UV-cured epoxy acrylate used herein is a material having low strength and creeping property.

To cope with the conventional problems, the present inventors have proposed using a coating of thermosetting resin for recoating the FBG in Japanese Patent Application No.11-184387. By using the thermosetting resin as a material for recoating the surface of the optical fiber written with the FBG, not only the strength can be promoted to solve the problems that the creep is generated and the probability of breakage of the optical fiber is increased but also thermal stability and wear-proof property can be improved.

Summary of the Invention

Problems as below will be encountered in using an optical fiber written with a FBG as a strain sensor.

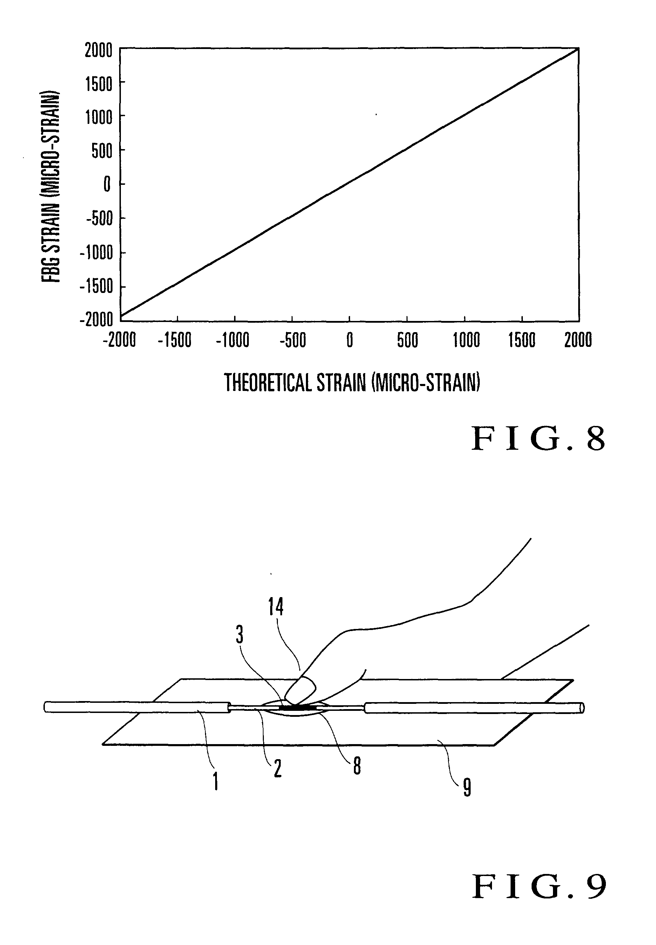

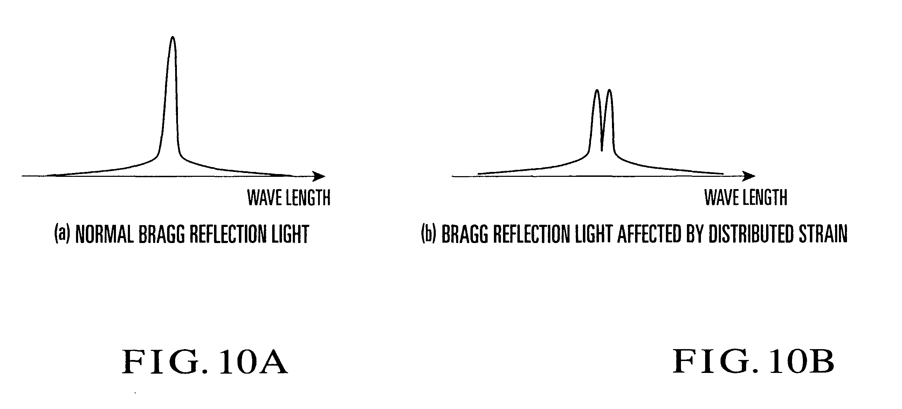

(1) When the sensor is used with part of the optical fiber written with the FBG exposed, that is, with the silica glass exposed, flaws or micro-cracks are generated in the surface to increase the probability of breakage.
(2) Even if the UV-cured epoxy acrylate or thermosetting resin is used for recoating the FBG to form a fiber strand, the fiber strand has a small outer diameter of 135 to 250 μm, raising a problem that the sensor is difficult to handle and there is a possibility that the sensor is broken.
(3) When the sensor is bonded to an object to be detected with the FBG exposed or with the strand used as it is, the optical fiber comes into line contact with the detection object and there results a small contact area.
(4) In case the optical fiber is bonded by pressing with a finger as shown in Fig. 9, because of irregularity in pressing pressure or irregularity in strain in the detection object per se, irregular strain is caused in a direction of length (longitudinal direction) of the portion written with the fiber Bragg grating. Consequently, the normal Bragg reflection characteristic as shown at (a) in Fig. 10 is broadened at the center wavelength of reflection from the fiber Bragg grating so as to be distributed as shown at (b) in Fig. 10, thus raising, in an extreme instance, a problem that split peaks of the reflection center wavelength in error are detected or the reflection center wavelength cannot be detected.

Accordingly, the present invention contemplates elimination of the conventional problems and it is an object of the invention to provide a patch type optical fiber sensor in which at leas one optical fiber written with a FBG is fixed to a film to form a detecting element for detection of strain.

To accomplish the above object, a patch type optical fiber sensor according to the invention comprises at least one optical fiber having its part written with a fiber Bragg grating, and a film-like member having one surface on which the optical fiber is fixed at that part and the other surface attached to an object to be detected, so that strain generated in the detection object is detected by the fiber Bragg grating through the film-like member.

Opposite ends of the part written with the fiber Bragg grating are connected to optical cords.

In embodiments, the film-like member comes into surface attach with the detection object by bonding or welding.

The optical fiber is fixed on the film-like member with resin.

The optical fiber sensor further comprises another film-like member and the optical fiber is sandwiched between two film-like members serving as cover and base, respectively, and is fixed with resin to provide a laminate structure.

The optical fiber is embedded in the film-like member made of resin and fixed therein.

The film-like member is a metal film and the optical fiber is fixed on the metal film by plating.

The film-like member is a metal film and the optical fiber is fixed on the metal film by evaporation.

Preferably, the film-like member is made of elastic and creep less resin for instance polyimide resin, epoxy resin, fluororesin, polyester resin, acryl resin, polycarbonate resin, metal, fiber reinforced plastics, glass, a mixture of these materials or a combination of these materials.

Preferably, the creep less resin used for bonding and fixing the optical fiber is polyimide resin, acryl resin, epoxy resin, polyester resin, fluororesin, phenol resin, bonding resin of cyanoacrylate system, a mixture of these materials or a combination of these materials.

Thus, according to the invention, the optical fiber can be protected with the film per se to decrease the generation of flaws or micro-cracks and reduce the probability that the optical fiber is broken. Since the film having high breaking strength by itself is included in the detecting element, danger of breaking the optical fiber during handling can be eliminated.

When the sensor is pressed on a detection object during bonding, pressing pressure is made to be uniform. As a result, the conventional problem caused during mounting that a plurality of peaks of Bragg wavelength are generated as shown at (b) in Fig. 10 owing to irregular strain attributable to irregular depression or the Bragg wavelength cannot at all be detected can be obviated and by virtue of uniform strain distribution, a Bragg wavelength of narrow wavelength-line width by reflection light from the FBG can be detected clearly as shown at (a) in Fig. 10.

In bonding, the bonding agent is spread thinly over the detection object. In welding, a metal film is mainly used and can be jointed semi-permanently to the detection object by, for example, spot welding.

By virtue of the surface contact, holding force applied to the detection object can be increased and strain from the detection object can be detected with high efficiency. Further, slight strain distribution at the detection object can be averaged, thereby ensuring that the Bragg wavelength of the measured object can always be detected stably and strain can be measured with high accuracy.

By fixing the optical fiber with resin, the optical fiber including the FBG can be protected and besides, the directivity of the FBG can be determined in advance.

When the optical fiber including the FBG is sandwiched between two films serving as cover and base, respectively, and is fixed with resin to provide a laminate-coated structure, the optical fiber written with the FBG is protected and besides, the covering film averages pressing pressure during bonding and the problem attributable to irregular patching can be solved.

Further, with the optical fiber embedded in the film made of resin and fixed therein, the optical fiber written with the FBG can be protected and besides, pressing force applied on the embedded optical fiber can be averaged to permit stable measurement values to be obtained.

Furthermore, with the optical fiber including the FBG fixed on the film by plating or evaporation, the time required for fixing can be reduced as compared to the case of bonding with resin and deterioration which the resin suffers from can be obviated to permit a permanent joint and stability can be maintained for a long period to advantage.

The film-like member may be made of polyimide resin, epoxy resin, fluororesin, polyester resin, polycarbonate resin, fiber reinforced plastics (hereinafter simply referred to as FRP) or glass. These materials are highly elastic which are removed of creeps and good at transmission of stress corresponding to strain to ensure the optical fiber written with the FBG to be distorted linearly. These materials can improve the thermal stability, medicine-proof property and water-tightness.

The FRP may include glass fiber reinforced plastics (GFRP) and carbon fiber reinforced plastics (CFRP).

The film may be formed of a metal film made of, for example, stainless, aluminum or copper that is weldable. The metal film is permitted for permanent joint to improve the durability.

The resin for fixing the optical fiber including the FBG to the film may be polyimide resin, epoxy resin, polyester resin, fluororesin, phenol resin or resin of cyanoacrylate resin system, the aforementioned resin being effective to improve the thermal-stability, medicine-proof property, water-tightness and durability.

Brief Description of the Drawings

Fig. 1 is a diagram showing at section (a) a plan view illustrating the construction of a first embodiment of a patch type optical fiber sensor according to the invention and at section (b) a sectional view of the sensor.
Fig. 2 is a diagram showing at sections (a) and (b) the construction of a second embodiment of the patch type optical fiber sensor according to the invention.
Fig. 3 is a diagram showing at sections (a) and (b) the construction of a third embodiment of the patch type optical fiber sensor according to the invention.
Fig. 4 is a diagram showing at sections (a) and (b) the construction of a fourth embodiment of the patch type optical fiber sensor according to the invention.
Fig. 5 is a diagram showing the construction of a fifth embodiment of the patch type optical fiber sensor according to the invention.
Fig. 6 is a diagram showing the construction of a sixth embodiment of the patch type optical fiber sensor according to the invention.
Fig. 7 is a diagram showing the construction of a seventh embodiment of the patch type optical fiber sensor according to the invention.
Fig. 8 is a graph showing the relation between strain output and theoretical strain in the patch type optical fiber sensor of the invention.
Fig. 9 is a diagram showing, in perspective view form, the construction of a conventional optical fiber sensor.
Fig. 10 is a diagram for explaining the characteristic of Bragg reflection from the FBG, showing at section (a) normal Bragg reflection light and at section (b) Bragg reflection light affected by distributed strain.

Description of the Preferred Embodiments

Various embodiments of a patch type optical fiber sensor according to the present invention will now be described with reference to the accompanying drawings.

(Embodiment 1)

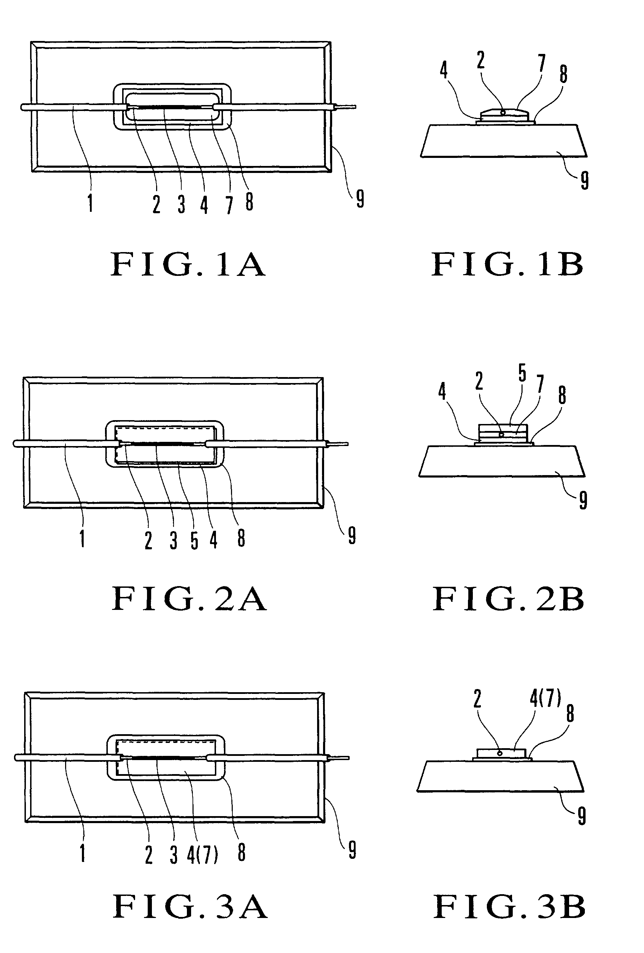

Referring first to Fig. 1, there is illustrated a first embodiment of the patch type optical fiber sensor. Especially, the sensor is shown in plan view form at section (a) in Fig. 1 and in sectional view form at section (b) in Fig. 1. An optical fiber 2 written with a FBG 3 is fixedly secured to a film 4 serving as a base with resin 7 to form a film-like detecting element. At opposite ends of the film 4, the optical fiber 2 is housed in an optical fiber cord 1 covered with a coating having a thickness of about 0.9mm and made of nylon or polyethylene elastomer. With this construction, the optical fiber 2 including the FBG 3 is protected with the film 4 and optical cord 1 and handling of the sensor can be very facilitated. In Fig. 1, one optical fiber 3 is depicted but a plurality of optical fiber s may be used as necessary in the invention.

Preferably, the film 4 serving as the base is formed of a polyimide film or epoxy film, because the above material exhibits a region of high elasticity and can transmit strain generated from an object 9 to be detected to the optical fiber 2, eventually, to the FBG 3 in the wide range without causing creep.

When the detecting element is bonded to the detection object 9, the film 4 serving as the base is brought into surface contact with the detection object 9 and bonding agent 8 is uniformly thinly spread there between to bond them. The film 4 serving as the base not only protects the FBG 3 but also averages non-uniform strain during bonding and strain generated in the detection object 9 to transmit uniform strain to the FBG 3, with the result that reflection light from the FBG 3 does not spread (distribute), thereby ensuring that a shift of the Bragg wavelength can be obtained while keeping the wavelength width narrow.

Referring to Fig. 8, there is illustrated graphically the relation between strain output $\Delta \varepsilon = \alpha \cdot \Delta \lambda$ in the patch type optical fiber sensor and theoretical strain, where $\Delta \lambda$ is a wavelength shift in the FBG and $\alpha$ is a wavelength strain coefficient. The theoretical strain herein referred to indicates a theoretical strain value or level generated with a mechanism in which tension strain and compression strain are generated in the surface of a bar by flexing the bar. Here, (+) designates tension and (-) designates compression. It will be seen from Fig. 8 that in respect of tension and compression, the patch type sensor of the invention detects substantially the same strain as the theoretical strain, proving that the patch type optical fiber sensor of the invention functions highly accurately.

(Embodiment 2)

Referring to Fig. 2, there is illustrated the construction of a second embodiment of the patch type optical fiber sensor according to the invention. The patch type optical fiber sensor is depicted in plan view form at section (a) in Fig. 2 and in sectional form at section (b) in Fig. 2. In embodiments to be described hereinafter, members identical to those in the first embodiment are designated by identical reference numerals. An optical fiber 2 written with a FBG 3 is sandwiched vertically between two films, of which one is a film 4 serving as base and the other is a film 5 for covering, and a gap is filled with resin 7 to rigidly put together the above parts, thus forming a detecting element of laminate structure. The film 5 for covering may be thicker than the film 4 serving as base and need not always be made of a highly elastic material. To explain, the film 4 serving as base has the role of receiving strain generated from an object 9 to be detected and transmitting the strain whereas the film 5 for covering need not transmit strain and is merely required to be made of a material that is sufficient to average depression pressure during patching and has a thickness sufficient for this purpose.

(Embodiment 3)

Fig. 3 shows the construction of a third embodiment of the patch type optical fiber sensor according to the invention. Fig. 3 depicts the sensor in plan view form at section (a) and in sectional form at section (b). Resin 7 is filled around an optical fiber 2 written with a FBG 3 and the resin is shaped and set or hardened to provide a detecting element of film-like structure. More particularly, a film 4 as a whole is made of resin 7 and the optical fiber 2 is embedded in the film 4. The resin of one kind of liquid is shaped into a film, so that the number of steps of fabricating the patch type sensor can be reduced to one, thereby ensuring that the sensor can be fabricated in a simplified manner and costs can be reduced. Preferably, the resin in this case may be thermosetting resin such as polyimide or may be made of a highly elastic material such as epoxy resin. The above material can exhibit a high elastic region and therefore can transmit strain generated from an object 9 to be detected to the optical fiber 2, eventually, to the FBG 3 in a wide range without causing creep.

(Embodiment 4)

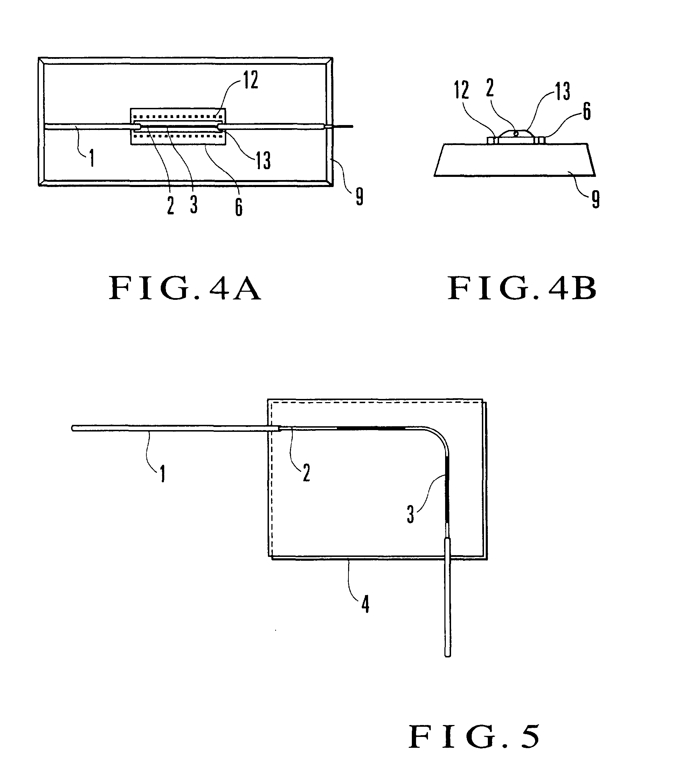

Fig. 4 shows the construction of a fourth embodiment of the patch type optical fiber sensor according to the invention. Fig. 4 depicts the sensor in plan view form at section (a) and in sectional form at section (b). An optical fiber 2 written with a FBG 3 is fixed to a metal film 6 by plating 13. Small holes 12 are formed in the metal film 6, reaching an object 9 to be detected.
In patching the metal film 6 to the object 9 to be detected, the metal film 6 is pressed on the detection object 9 and is fixed by spot welding through the individual small holes 12. Through this, permanent bonding, unattainable by bonding of the type described so far, can be obtained to promote durability.

(Embodiment 5)

Fig. 5 shows the construction of a fifth embodiment of the patch type optical fiber sensor. Structurally, the present embodiment is an applicative one of the first embodiment.
In the sensor shown in Fig. 5, two FBG's 3 are provided in one optical fiber 2 at two different sites so as to be orthogonal to each other, thus exemplifying a patch type optical fiber sensor in which a plurality of FBG's are provided. With this construction, strain detection in two axes can be ensured.

(Embodiment 6)

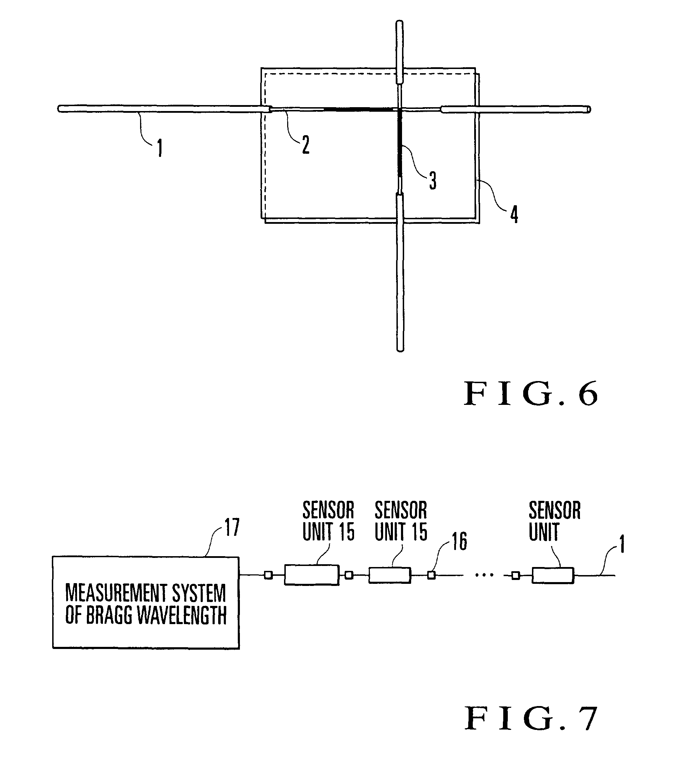

Fig. 6 shows the construction of a sixth embodiment of the patch type optical fiber sensor. Structurally, the present embodiment is also an applicative one of the first embodiment.
In Fig. 6, two optical fiber s 2 are fixed on one film 4 in orthogonal directions, also showing a structure in which a plurality of FBG's are provided in one patch type optical fiber sensor. With this construction, too, strain can be detected in two axes by the two FBG's written in the optical fiber s.
As exemplified in Figs. 5 and 6, by providing a plurality of FBG's and a plurality of optical fiber s to one film, a variety of kinds of strain can be measured at many points.

(Embodiment 7)

Fig. 7 shows the construction of a seventh embodiment of the patch type optical fiber sensor according to the invention. In Fig. 7, patch type optical fiber sensor units 15 are provided at a plurality of points and they are connected in series by one optical fiber cord 1 or optical cable through optical connection points 16 to which the optical cord or cable is connected by means of optical connectors or by fusion, so that the patch type optical fiber sensor units disposed at many points set up a scheme for measuring strain at a plurality of points in architecture by using a Measurement system of Bragg wavelength 17 for FBG. Conceivably, the present embodiment may be applied to various kinds of architecture including buildings and bridges. Each sensor unit is constructed similarly to the patch type optical fiber sensor in the foregoing embodiments.

In installing the optical fiber sensors, they must be disposed at intervals of wavelength in accordance with a Bragg wavelength of the FBG or a level of strain. More specifically, where the wavelength is $\lambda i$ and the maximum strain change (maximum wavelength shift) at the wavelength $\lambda i$ is $\triangle \lambda_{MAX\,i}$, a wavelength interval $\triangle \lambda p$ is needed between the maximum strain change $\triangle \lambda_{MAX\,i}$ at the wavelength $\lambda_i$ and the maximum strain change $\triangle \lambda_{MAx\,i+1}$ at the succeeding wavelength $\lambda_{i+1}$ for the sake of preventing erroneous measurement and therefore, the following relation must be set up in relation to a wavelength detection level $\triangle \lambda_M$ owned by the Measurement system of Bragg wavelength.

$$\Delta\lambda_M > (\triangle \lambda_{MAX\,1} + \triangle \lambda_{MAX\,2} + \cdots + \Delta\lambda_{MAX\,n} + (n-1) \cdot \triangle \lambda p) \qquad (1)$$

where n is the number of FBG's.

This signifies that the wavelength detection level provided for the Measurement system of Bragg wavelength is limited and as the number of FBG's or the wavelength change is large, a necessary number of FBG's or a necessary wavelength change (namely, a wavelength range corresponding to a strain level to be detected) must be allotted correspondingly. In the FBG sensor usually employed, the wavelength detection level $\Delta \lambda_M$ provided for the Measurement system Bragg wavelength is 40nm and the wavelength interval $\triangle \lambda p$ for prevention of erroneous measurement is 0.6nm. Then, given that the sensor changes in wavelength by 2nm, the maximum number n of sensors is about 15.

To implement the multi-point measurement as above, in addition to the use of the patch type sensors as detecting devices, this type of sensors may be used in combination with sensors using other kinds of FBG's. Obviously, without departing from the gist of the invention, various alterations and modifications can be possible.

According to the FBG patch type optical fiber sensor of the invention, the optical fiber including the FBG can be protected to eliminate danger of breakage. In the film-like detecting element, bonding agent applied between the element and a detection object can be spread uniformly thinly and fabrication can be facilitated. Depression pressure during bonding can be averaged to permit levels of strain generated in the detection object to be averaged for detection, thus ensuring that a Bragg wavelength shift due to exact strain can be detected highly accurately.

**Claims**

1. A patch type optical fiber sensor **characterized by** comprising at least one optical fiber (2) having its part written with a fiber Bragg grating (3), and a film-like member (4) having one surface on which said optical fiber is fixed at that part and the other surface attached to an object (9) to be detected, so that strain generated in said detection object is detected by said Bragg wavelength shift of the fiber Bragg grating through said film-like member.

2. A patch type optical fiber sensor according to claim , **characterized in that** said film-like member (4) comes into surface attach to said detection object (9) by bonding or welding.

3. A patch type optical fiber sensor according to claim 1, **characterized in that** said optical fiber (2) is attached on said film-like member (4) with adhesive bonds (8).

4. A patch type optical fiber sensor according to claim 1 further comprising another film-like member (5), **characterized in that** said optical fiber (2) is sandwiched between two film-like members (4, 5) serving as cover (5) and base (4), respectively, and is fixed with resin (8) to provide a laminate structure.

5. A patch type optical fiber sensor according to claim 1,
**characterized in that** said optical fiber (2) is embedded in said film-like member (7) made of resin and fixed therein.

6. A patch type optical fiber sensor according to claim 1, **characterized in that** said film-like member (2) is a metal film (6) and said optical fiber (2) is fixed on said metal film by plating.

**7.** A patch type optical fiber sensor according to claim 1, **characterized in that** said film-like member (2) is a metal film (6) and said optical fiber (2) is fixed on said metal film by evaporation.

**8.** A patch type optical fiber sensor according to claim 1, **characterized in that** said film-like member (4) is made of elastic and creep less resin for instance polyimide resin, epoxy resin, fluororesin, polyester resin, acryl resin, polycarbonate resin, metal, fiber reinforced plastics, glass, a mixture of these materials or a combination of these materials.

**9.** A patch type optical fiber sensor according to claim 1, **characterized in that** said optical fiber have already coated with said elastic and creep less resin.

**10.** A patch type optical fiber sensor according to claim 3, **characterized in that** said resin (7) used for bonding and fixing said optical fiber is polyimide resin, acryl resin, epoxy resin, polyester resin, fluororesin, phenol resin, bonding resin of cyanoacrylate type, a mixture of these materials or a combination of these materials.

**11.** A patch type optical fiber sensor **characterized by** comprising at least one optical fiber (2) written with at least two fiber Bragg gratings (3) at its different parts, and a film-like member (4) having one surface on which said optical fiber is fixed at the different parts such that said parts are orthogonal to each other and the other surface fixed to an object (9) to be detected, so that strain generated in said detection object is detected by said fiber Bragg gratings in at least two axes directions through said film-like member.

**12.** A patch type optical fiber sensor **characterized by** comprising at least two optical fiber s (2) each having its part written with a fiber Bragg grating (3), and a film-like member (4) having one surface on which said optical fiber s (2) are each fixed at its part so as to be orthogonal to each other and the other surface fixed to an object (9) to be detected, so that strain generated in said detection object (9) is detected by said fiber Bragg gratings in at least two axes directions through said film-like member.

**13.** A patch type optical fiber sensor **characterized by** comprising a plurality of optical fiber sensor units (15) connected in series by a single optical fiber cord (1) through optical connection points (16), each of said units (15) including at least one optical fiber (2) having its part written with a fiber Bragg grating (3) and a film-like member (4) having one surface on which said optical fiber is attached at that part and the other surface fixed to an object (9) to be detected, and a wavemeter (17) for fiber Bragg grating connected to one end of said single optical cord (1).

EP 1 148 324 A2

FIG.1A

FIG.1B

FIG.2A

FIG.2B

FIG.3A

FIG.3B

FIG.4A

FIG.4B

FIG.5

F I G . 6

F I G . 7

FIG. 8

FIG. 9

WAVE LENGTH

(a) NORMAL BRAGG REFLECTION LIGHT

FIG. 10A

WAVE LENGTH

(b) BRAGG REFLECTION LIGHT AFFECTED BY DISTRIBUTED STRAIN

FIG. 10B